(19) Europäisches Patentamt
European Patent Office
Office européen des brevets

(11) Publication number: **0 464 744 A2**

# (12) EUROPEAN PATENT APPLICATION

(21) Application number: **91110871.0**

(22) Date of filing: **01.07.91**

(51) Int. Cl.5: **C08F 4/68**, C08F 4/637, C08F 10/02

(30) Priority: **02.07.90 US 545934**

(43) Date of publication of application: **08.01.92 Bulletin 92/02**

(84) Designated Contracting States: **AT BE DE FR GB IT NL SE**

(71) Applicant: **UNION CARBIDE CHEMICALS AND PLASTICS COMPANY, INC.**
**39 Old Ridgebury Road**
**Danbury Connecticut 06817-0001(US)**

(72) Inventor: **Wagner, Burkhard Eric**
**40, Lawrence Avenue**
**Highland Park, New Jersey 08904(US)**
Inventor: **Samuels, Sari-Beth**
**27 Romopoc Court, Indian Field**
**Mahwah, New Jersey 07430(US)**
Inventor: **Karol, Frederick John**
**18 Hiland Drive**
**Belle Mead, New Jersey 08502(US)**

(74) Representative: **Barz, Peter, Dr. et al**
**Patentanwälte Dipl.-Ing. G. Dannenberg Dr. P. Weinhold, Dr. D. Gudel Dipl.-Ing. S. Schubert, Dr. P. Barz Siegfriedstrasse 8**
**W-8000 München 40(DE)**

## (54) Catalyst and process for making ethylene polymers.

(57) An improved ethylene polymerization process and catalyst system based on the use of a siliceous containing supported precursor of vanadium halide/electron donor complex, which utilizes chemisorption, as well as physisorption, of the catalyst to the support. This is effected by fixing the vanadium halide/electron donor complex in the support with a zinc alkyl compound that is chemisorbed to the support.

EP 0 464 744 A2

There is described a novel ethylene catalyst precursor, a novel ethylene polymerization catalyst, a novel process for making the ethylene polymerization catalyst, and a process for polymerizing ethylene, alone or in combination with other olefins with the novel catalyst. The catalyst features a precursor containing adsorbed vanadium trihalide tightly fixed to a siliceous support surface via the interreaction of the support with an alkyl zinc and the chemisorption of the vanadium trihalide with the interreaction product of the alkyl zinc and the support.

*Beran et al.*, U.S. 4,508,842, patented Apr. 2, 1985, describe an ethylene polymerization catalyst comprising a supported precursor of vanadium trihalide/electron donor complex and alkylaluminum or boron halides, when combined with alkylaluminum cocatalyst and alkyl halide promoter, provides enhanced polymerization and productivity plus a superior polyethylene product. *Beran et al.* describe a process utilizing that catalyst for producing polyethylene that involves polymerizing ethylene with or without at least one $C_3$ to $C_{10}$ alpha-olefin monomer in the gas phase at a temperature between about 30°C. to about 115°C. wherein the monomers are contacted with the catalyst composition comprising a supported precursor vanadium compounds and modifiers which are impregnated on a solid, inert carrier. The catalysts utilized by *Beran et al.* differentiate in comprising a supported precursor, a cocatalyst and a promoter in which the supported precursor is a vanadium compound and modifier impregnated on a solid, inert carrier. The vanadium compound in the precursor is the reaction product of a vanadium trihalide and an electron donor. The halogen in the vanadium trihalide is chlorine, bromine or iodine, or mixtures thereof. A particularly preferred vanadium trihalide is vanadium trichloride, $VCl_3$. The electron donor is a liquid, organic Lewis base in which the vanadium trihalide is soluble. The electron donor is selected from the group consisting of alkyl esters of aliphatic and aromatic carboxylic acids, aliphatic ketones, aliphatic amines, aliphatic alcohols, alkyl and cycloalkyl ethers, and mixtures thereof. Preferred electron donors are alkyl and cycloalkyl ethers, including particularly tetrahydrofuran ("THF"). Between about 1 to about 20, preferably between about 1 to about 10, and most preferably about 3 moles of the electron donor are complexed with each mole of vanadium used.

A preferred catalyst precursor of the *Beran et al. Catalyst System* is prepared by impregnating a solution of $VCl_3 \cdot (THF)_3$ into silica to give solid $VCl_3 \cdot (THF)_3$ within the pores of silica. $VCl_3 \cdot (THF)_3$ does not react with silica. In making the supported precursor, vanadium trichloride is dissolved in, e.g., THF, and the solution is impregnated in the support. A problem with the impregnation of vanadium trichloride in a solution of the electon donor THF stems from the limited solubility of the vanadium trichloride in the solution. The solubility of $VCl_3$ in THF is about 0.08-0.15 mmol V/ml THF depending upon temperature.

Occasionally, the catalyst precursor gives excessive fines due to precipitation of $VCl_3 \cdot (THF)_3$ on the outside of the silica particles. [1] This poor impregnation is believed to contribute to gels in films, and to poor operability of the process. Also, the low solubility of $VCl_3$ in TNT makes high loading of $VCl_3$ inside the silica difficult to obtain, and makes impregnation difficult to control. As a result, in order to avoid deleterious precipitation of the vanadium trichloride prior to effective impregnation, very controlled and metered impregnation procedures must be used. These add to the cost of the precursor. In any case, these techniques result in a limit to the amount of vanadium trichloride that can be impregnated in the support, and there is a limit to effective distribution of the vanadium trichloride throughout the support particles.

As is typical with impregnated catalyts, it is desirable to maximize catalyst loadings in the support. It is most beneficial if the loaded catalyst is uniformly distributed in the support. It is also desirable to be able to load catalyst in a support without premature precipitation since such creates a recovery problem in catalyst manufacture. Lastly, it is most desirable to insure that catalyst deposition is not coated on the catalyst support, since it is such coatings are typically loosely held in the support and are easily detached from the support during handling and shaken loose from the support during polymerization.

*Smith et al.*, U.S. 4,559,318, patented December 17, 1985, describe a number of procedures for making $VX_2$, where X is halogen, which involves the reduction of $VX_4$ or $VX_3$ by reaction with reducing agents followed by the complexation of the $VX_2$ with an ether such as THF. Such is provided on a support surface. *Smith et al.* state reduction after combination with the support would preferably be carried out using a hydrocarbon soluble reducing agent such as a dialkyl zinc compound. According to the patent, the catalysts are useful for the polymerization of ethylene alone or with a variety of 1-olefin monomers to make

1. During the preparation of Beran et al. Catalyst System catalysts, the vanadium complex is impregnated in the pores of a silica support and then the precursor is treated with a Lewis acid. The $VCl_3$ salt is only sparingly soluble in THF, and during the impregnation/drying steps, unsupported precursor particles may precipitate out. This results in nonuniform distribution of impregnated particles in the support. Unless carefully monitored, particle to particle variations result which affect catalyst response.

homopolymers and copolymers. Illustrative of the 1-olefin monomers are one or more of propylene, 1-butene, 1-pentene, 1-hexene and 1-octene.

*Roling et al.*, U.S. Patent No. 4,434,242 teach chemisorption of a $V^{(V)}$ oxyhalide, such as $O=VCl_3$, vanadium alkoxide or $VCl_4$ onto a metal oxide support having its surface hydroxyl groups reacted away with a substantially stoichiometric amounts of Group 13 [2] metal (i.e., Al, Ga) alkyl, followed by further treatment with an alcohol to narrow the molecular weight distribution of the resultant polymer.

*George*, U.S. 4,370,456, patented January 25, 1983, discloses ethylene copolymers having improved resistance to pinstriping and gel streaking when extruded into film, and less corrosiveness to conventional molding and extrusion equipment employed to process them at elevated temperatures. They are produced by continuously copolymerizing ethylene with one or more higher alpha-olefin monomers in a low pressure gas phase reaction with catalyst composition prepared by forming a precursor composition from a magnesium compound, titanium compound, and electron donor compound; diluting the precursor composition with a silica support which has been treated with a dialkylzinc compound; and activating the diluted precursor composition with an organo aluminum compound.

This invention relates to

◊ an ethylene polymerization catalyst precursor;
◊ an ethylene polymerization catalyst;
◊ a process for making the ethylene polymerization catalyst; and
◊ a process of polymerizing ethylene, alone or in combination with other olefins with the catalyst of the invention.

This invention relates to a novel ethylene polymerization catalyst precursor and the consequent catalyst, a novel process for the manufacture of the ethylene polymerization catalyst, and the process of polymerizing ethylene, alone or in combination with one or more other olefins. The catalyst of the invention comprises the chemisorption and physiosorption of vanadium trihalide onto the surfaces of a solid siliceous support, such that the support contains greater concentrations of the vanadium trihalide, and thereafter effecting reduction of the vanadium trihalide.

In addition, the invention relates to the chemisorption of a zinc alkyl onto siliceous containing catalyst support surfaces and subsequent chemisorption of the vanadium trihalide species onto the support surfaces.

This invention relates to an improved ethylene polymerization process and catalyst system based on the use of a siliceous containing supported precursor of a vanadium trihalide/electron donor complex and alkylaluminum or boron halides, which utilizes chemisorption and physisorption of the vanadium trichloride to the support. This is effected by the sequential impregnation of a zinc alkyl and an electron donor solution of a vanadium trichloride into a siliceous catalyst support, followed by addition to the reacted support of a modifier of the vanadium trichloride to produce a catalyst precursor essentially equivalent to the precursor composition of ***Beran et al. Catalyst System*** in polymerization properties.

The first step of the procedure in forming the catalyst of this invention is the treatment by impregnation of a siliceous support with a zinc alkyl. This forms the unique adsorption site for the later inclusion of chemisorbed and physisorbed vanadium trichloride. This combination of chemisorption and physisorption results in the formation of a ***Beran et al. Catalyst System*** with the advantages of high and uniform vanadium loadings.

The next and subsequent steps of the procedure is the impregnation of the support with the vanadium halide electron donor solution, followed by modifier treatment and drying, according to ***Beran et al.***

Alternatively, the adsorption sites may be formed concurrently with the impregnation of the support with the vanadium halide/electronic donor solution. This is done by simultaneously depositing the zinc alkyl and the vanadium halide electronic donor complex from one solution onto the siliceous support. Concurrent deposition provides many of the benefits cited for the invention but is less efficient than sequential deposition in providing adsorption sites.

This invention relates to novel moderated catalyst compositions, and to processes for the polymerization of ethylene to make ethylene homopolymers and copolymers.

The novel catalyst compositions of the invention are formed by the process which comprise

▷ impregnating an alkyl zinc into a porous siliceous support material and reacting the alkyl zinc such that it is chemically bound to the surface of the support;
▷ impregnating a solution of vanadium trihalide in combination with an electron donor composition, into

2. New notation of the Periodic Table Of The Elements, see Chemical and Engineering News, 63(5), 27, 1985); as noted in CRC Handbook of Chemistry and Physics, 67th Edition, CRC Press Inc., Boca Raton, Florida, inside frontcover.

the alkyl zinc treated support and chemisorbing and physisorbing the vanadium trihalide in the support;

- ▷ modifying vanadium trihalide impregnated into the support by the impregnation of a modifier into the support; and
- ▷ drying the modified impregnated support to produce a supported precursor.

The first stage of the invention involves the treatment of a siliceous filler material, characterized herein as a support or catalyst support, that contains surface silanol groups. The treatment comprises the impregnation of the support with an alkyl zinc compound and the chemisorption of the zinc alkyl to the support's surface, bonded thereto by condensation with the silanol groups of the support This treated support has the facility of readily chemisorbing and physisorbing vanadium trihalide materials to such an extent that the support can be loaded with uniquely high concentrations of vanadium trihalide. This treated support can be *in situ* formed in a single stage combination of simultaneous deposition of the zinc alkyl compound and vanadium trihalide materials on the support, though simultaneous deposition is not as effective for maximizing the amount of vanadium trihalide loading on the support.

The second stage of the invention involves the formation of the catalyst precursor. In this respect, the term precursor has the general meaning given in *Beran et al.*. The zinc alkyl treated support is impregnated with vanadium trihalide solution or slurry and the impregnated support is dried. The impregnated product may then be treated with a modifier according to *Beran et al.* to reduce the vanadium trihalide to an effective catalyst precursor composition.

The third stage of the invention involves the use of the precursor of the invention in a reactor to which is supplied ethylene, alone or with one or more $\alpha$-olefins, cocatalyst and promoter, to form an ethylene polymer. This invention encompasses a total catalyst composition comprising the supported precursor as aforedefined, a cocatalyst, and a promoter.

The invention embraces a process of chemisorbing a vanadium trichloride electron donor complex in a siliceous containing support which possesses silanol structural units which reacts with zinc alkyl to chemically bound the zinc to Si units on the surface of the siliceous containing support and thereafter contacting vanadium trichloride in an electon donor solution with the reaction product to chemisorb and physisorb vanadium trichloride to the surface.

The invention encompasses the precursor to the chemisorbed vanadium trichloride which involves the treatment of the siliceous containing support with a zinc alkyl as an interlinking agent for the chemisorption of the vanadium trichloride to the siliceous support surfaces. The zinc alkyl irreversibly reacts with the silanol groups on the surface of silica and provides the chemisorption reaction site for inclusion of vanadium trichloride in the support. Chemisorption assures that a sufficient amount of the active vanadium trichloride is irreversibly bound inside the silica support. Physisorption of the vanadium trichloride to the modified siliceous support surface occurs essentially concurrently with its chemisorption that creates the modification. This irreversible removal of $VCl_3$ from the solution by chemisorption into siliceous support allows high loading of $VCl_3$ in the siliceous support with, e.g., dilute $VCl_3 \bullet (THF)_3$ solutions.

This invention relates to the polymerization of ethylene, alone or in the presence or absence of another comonomer to form an ethylene homopolymer or a copolymer, such as an EPM and an EPDM resin, utilizing the catalyst and process of *Beran et al.* modified by chemisorption, or chemisorption and physisorption, of the vanadium halide into the support.

After slurring a solution of a salt with a porous support, there are three ways in which the salt may be deposited within the support. First, the metal salt may be precipitated into the support by evaporation of the solution. During evaporation, the salt equilibrates its concentration inside the support with concentration in the evaporating solution, since there is no driving force to "fix" the salt inside the support. The metal salt is reversibly removable from the support. Precipitation of the salt begins once the solubility of the salt in the liquid (both within the pores and in the main solution) is exceeded. This is the mechanism of incorporation utilized by *Beran et al.* to provide the, vanadium trichloride in the support.

Second, the metal salt may be chemisorbed onto the surface of the support and this creates an irreversible reaction with the support surface by virtue of the existance of strong bonding forces between the surface and the metal salt. Chemisorption onto the surface of the support is independent of concentration of metal salt in the liquid phase.

Third, the metal salt may be physisorbed onto the surface of the support. Physisorption creates a strong affinity of the metal salt for the support by reason of weak bonding forces existing between the support and the metal salt, making the salt removable, but with greater difficulty, from the support. A higher concentration of metal salt will exist inside the support than in the main body of the solution. The magnitude of physisorption increases as the concentration of metal salt in the liquid phase increases.

Each of these three ways of incorporation may be accomplished by impregnation of the salt into the

support pores. Impregnation does not assure chemisorption or physisorption. The latter conditions of incorporation require more than a precipitation of the salt from a suspended form onto the surface of the substrate.

The impregnation of vanadium trichloride is altered through this invention by changing the surface silanol groups into a form where they react irreversibly with the $VCl_3 \cdot (THF)_3$ via chemisorption. Chemisorption assures that $VCl_3$ is bound inside the silica. The irreversible removal of $VCl_3$ from the solution by chemisorption into a silica support allows operation in dilute $VCl_3 \cdot (THF)_3$ solution while still achieving high loading of $VCl_3$ in silica. Chemisorption quickly and irreversibly removes enough vanadium trichloride from solution so as to maintain a lower concentration in solution thereby reducing the potential for precipitation. In addition, this chemisorption reaction introduces surface changes in the support such that it is materially more susceptible to physisorb additional $VCl_3$.

As shown herein, the *Beran et al. Catalyst System* catalyst can be transformed into a surface adsorb form that is inclusive of chemisorption and physisorption. Either the vanadium trichloride source or the support can be modified to make the vanadium center adhere strongly to the surface by using zinc alkyl to facilitate such adherence. One-pot preparation of the catalyst precursor is now possible. Where chemisorption is combined with physisorption, very high vanadium loadings can be achieved.

Four basic, demonstratable differences exist between a chemisorbed catalyst system of the invention and an impregnated catalyst such as described by *Beran et al.*

1. A chemisorbable catalyst system assures full mass transport of the vanadium trichloride from solution into the interior of the support so that it remains trapped inside the support during the precursor drying stage despite the outward flow of evaporating solvent.
2. The chemisorbed vanadium trichloride can be expected to exist in bonded, exposed, mononuclear form on the internal surface of the support such that all sites are accessible to modifiers, and cannot be washed away from the surface by the solvent used in the modification unless the chemisorption bond is cleaved.
3. Through the kinetics of the chemisorption process, the vanadium trichloride is distributed fairly uniformly throughout the interior of the support particle. [3]
4. Chemisorption so modifies the surface that it is amenable to weakly bond additional amounts of vanadium trichloride thereby increasing the loading of vanadium trichloride in the support far in excess of the loading attainable by conventional impregnation.

Chemisorbable catalysts of this invention offer advantages in catalyst design, catalyst preparation, and catalyst modification over the conventional impregnated catalysts. Chemisorption of the vanadium complex catalyst provides advantages in simplicity and reproducibility of catalyst preparation, superior morphologic polymeric properties, and maintenance of polymer properties.

### *The Supported Precursor*

The supported precursor comprises the intermediate supported precursor and the supported precursor derived therefrom. The intermediate supported precursor is

- ♦ an zinc alkyl modified siliceous-containing carrier, and
- ♦ a vanadium trichloride complex which is chemisorbed and physisorbed with the carrier.

The supported precursor is

- ♦ the intermediate supported precursor and
- ♦ a modifier for the vanadium which is provide on the solid, inert siliceous-containing carrier.

### *The Alkyl Zinc Agent*

Dialkylzinc compounds suitable for use in the invention are those illustrated by the formula:

$R^{\blacklozenge}R^{\square}Zn$ (I)

wherein $R^{\blacklozenge}$ and $R^{\square}$ are each alkyl of 1 to about 12 carbon atoms, and preferably of 1 to about 6 carbon

3. In contrast, the vanadium trichloride in the conventional impregnated precursor goes wherever the evaporating solvent takes it, and precipitates whenever its solubility is exceeded. It may precipitate as multinuclear crystallites within the volume of the pores, or on the outer surface of the support, or even as free particles of vanadium trichloride separated from the support.

atoms. Such radicals may be cyclic, branched or straight chain, and may be substituted with any substituent which is nonreactive with the catalyst and reactants present in the reactor nor sterically hinder physisorption of vanadium trichloride to the support. Illustrative of such radicals are methyl, ethyl, n-propyl, isopropyl, n-butyl, tert-butyl, n-hexyl, n-octyl, n-decyl, and the like.

Zinc alkyl is added to the support in an amount sufficient to provide from greater than 0 mole to less than or equal to 1 mole of zinc per mol of silica silanols in the support, preferably from 0.2 to 1 mole of zinc per mole silica silanol in the support.

The zinc alkyl is usually provided in the support neat, if liquid at the use temperature, or dissolved or suspended in an inert liquid. By an inert liquid is meant a solvent or diluent which is not adversely reactive with the zinc alkyl. Hydrocarbons such as isopentane, hexane, heptane, toluene, xylene and naphtha are preferred for this purpose. The electron donor compound used with the vanadium trichloride can be used for this purpose. Generally, such solutions contain from 1 weight percent to 99 weight percent of the zinc alkyl, usually from 2 weight percent to 12 weight percent of such compound.

*The Vanadium Compounds*

The vanadium compound in the precursor is the reaction product of a vanadium trihalide and an electron donor. The halogen in the vanadium trihalide is chlorine, bromine or iodine, or mixtures thereof. A particularly preferred vanadium trihalide is vanadium trichloride, $VCl_3$. The amount of vanadium added to the electon donor solution should be such that the combined adsorption and precipitation processes do not permit precipitation of $VCl_3$/electron donor salts either from solution or on the exterior of the impregnated particles.

*The Electron Donor*

The electron donor is a liquid, organic Lewis base in which the vanadium trihalide is soluble. The electron donor is selected from the group consisting of alkyl esters of aliphatic and aromatic carboxylic acids, aliphatic ketones, aliphatic amines, aliphatic alcohols, alkyl and cycloalkyl ethers, and mixtures thereof. Preferred electron donors are alkyl and cycloalkyl ethers, including particularly tetrahydrofuran (THF). Between about 1 to about 20, preferably between about 1 to about 10, and most preferably about 3 moles of the electron donor are complexed with each mole of vanadium used.

*The Modifier*

The modifier used in the precursor has the formula:

$MX_a$ (II)

wherein M is either boron or $AlR_{(3-a)}$ and wherein each R is independently alkyl provided that the total number of aliphatic carbon atoms in any one R group may not exceed 14; X is chlorine, bromine or iodine; and a is 1 or 2 with the provision that when M is boron, a is 3. Preferred modifiers include $C_1$ to $C_6$ alkylaluminum mono- and dichlorides and boron trichloride. A particularly preferred modifier is diethyl aluminum chloride. About 0.1 to about 10, and preferably about 0.2 to about 1.5 moles of modifier are used per mole of electron donor.

*The Solid, Inert Carrier*

The siliceous-containing carrier is a solid particulate porous material inert to the polymerization and is typically a silica or aluminosilicate, i.e., oxides of silicon or a mixture of oxides of aluminum and oxides of silica Optionally, the carrier may contain additional materials such as zirconia, thoria or other compounds chemically inert to the polymerization. The carrier is used as a dry powder having an average particle size of between about 10 to 250, preferably about 20 to about 200, and most preferably about 30 to about 100 microns. The porous carrier has a surface area of greater than or equal to about 3 $m^2/g$ and preferably greater than or equal to about 50 $m^2/g$. A preferred carrier is silica having pore sizes of greater than or equal to about 80, and preferably greater than or equal to about 100 angstroms. The silica supports are typically dried to remove free water and much of the bound water. This is effected by heating the supports for at least 4 hours, usually 6 to 10 hours, in a fluid bed in air, at 600-800 °C., followed by purging with nitrogen. In any case, the siliceous-containing carrier, prior to reaction with the vanadium halide complex,

possesses enough silanol groups, or groups precursor to silanol groups, to effect chemisorption of the catalyst. At 600 °C. drying temperature, the silica supports typically contain about 0.7-0.8 mmole silanol per gram.

*The Cocatalyst*

The cocatalyst is a separately provided component of the catalyst system of the invention. The cocatalyst is not part of the catalyst though it may be supplied to the polymerization reaction with the catalyst. The cocatalyst and promoter are added to the supported precursor either before and/or during the polymerization reaction The cocatalyst and promoter are added either together or separately, and either simultaneously or sequentially during polymerization. The cocatalyst and promoter are preferably added separately as solutions in inert solvent, such as isopentane, during polymerization.

The cocatalyst has the formula:

$AlR_3$ (III)

wherein R is as previously defined in the definition of M in formula I, *supra*. Preferred cocatalysts include $C_2$ to $C_8$ trialkylaluminum compounds. A particularly preferred cocatalyst is triisobutyl aluminum. Between about 6 to about 500, and preferably between about 10 to about 30 moles of cocatalyst are used per mole of vanadium.

*The Promoter*

The promoter is a halogenated organic compound such a halohydrocarbon of the formula:

$R'_bCX'_{(4-b)}$ (IV)

wherein R' is hydrogen or unsubstituted or halosubstituted lower alkyl, i.e., up to about $C_6$ containing alkyl; X' is halogen; and b is 0, 1 or 2. Illustrative of suitable halohydrocarbons are the following:

| | |
|---|---|
| $CCl_4$ | $CH_3CHICHCl_2$ |
| $CBr_4$ | $CH_3CBr_2CBr_3$ |
| $CHCl_3$ | $CH_3CBr_2CHBr_2$ |
| $CHBr_3$ | $CH_3CI_2CI_3$ |
| $CH_2Cl_2$ | $CH_3CCl_2CHI_2$ |
| $CF_2Cl_2$ | $CH_3CH_2CCl_3$ |
| $CH_2Br_2$ | $CH_3CH_2CHCl_2$ |
| $CF_2Br_2$ | $CH_3CH_2CBr_3$ |
| $CH_3CCl_3$ | $CH_3CH_2CHBr_2$ |
| $CH_3CHCl_2$ | $CH_3CH_2CI_3$ |
| $CHF_2CCl_3$ | $CH_3CH_2CHI_2$ |
| $CClF_2CCl_3$ | $CH_3CH_2CH_2CCl_3$ |
| $CF_3CHCl_2$ | $CH_3CH_2CH_2CHCl_2$ |
| $CH_3CBr_3$ | $CH_3CH_2CH_2CBr_3$ |
| $CH_3CHBr_2$ | $CH_3CH_2CH_2CHBr_2$ |
| $CH_3CI_3$ | $CH_3CH_2CH_2CI_3$ |
| $CH_3CHI_2$ | $CH_3CH_2CH_2CHI_2$ |
| $CH_3CF_2CCl_3$ | $CH_3CH_2CCl_2CHCl_2$ |
| $CH_3CHFCHCl_2$ | $CH_3CH_2CCl_2CCl_3$ |
| $FCH_2CH_2CBr_3$ | $CH_3CH_2CHClCCl_3$ |
| $CH_3CH_2CHBr_2$ | $CH_3CH_2CHClCHCl_2$ |
| $CH_3CH_2CI_3$ | $CH_3CH_2CFClCCl_3$ |
| $CH_3CH_2CHI_2$ | $CH_3CH_2CHBrCCl_3$ |
| $CH_3CCl_2CHCl_2$ | $CH_3CH_2CBr_2CCl_3$ |
| $CH_3CCl_2CCl_3$ | $CH_3CH_2CBrClCCl_3$ |
| $CH_3CHClCCl_3$ | $CH_3CH_2CIClCCl_3$ |
| $CH_3CHClCHCl_2$ | $CH_3CH_2CHICHCl_2$ |
| $CH_3CFClCCl_3$ | $CH_3CH_2CBr_2CBr_3$ |
| $CH_3CHBrCCl_3$ | $CH_3CH_2CBr_2CHBr_2$ |
| $CH_3CBr_2CCl_3$ | $CH_3CH_2CI_2CI_3$ |
| $CH_3CBrClCCl_3$ | $CH_3CH_2CCl_2CHI_2$ |
| $CH_3CIClCCl_3$ | |

Preferred promoters include flouro, chloro or bromo substituted ethane or methane having at least 2 halogens attached to a carbon atom. Preferred promoters include $CCl_4$, $CHCl_3$, $CH_2Cl_2$, $CBr_4$, $CFCl_3$, $CH_3CCl_3$, and $CF_2ClCCl_3$. Particularly preferred promoters are methylene dichloride ($CH_2Cl_2$), 1,1,1,trichloroethane, ($CH_3CCl_3$), and chloroform ($CHCl_3$). Between about 0.1 to about 10, and preferably between about 0.2 to about 2, moles of promoter are used per mole of cocatalyst.

*Support Modification*

The complexed vanadium halide catalyst of the *Beran et al. Catalyst* System can be transformed into a chemisorbed form by a variety of pathways. For example, either the vanadium compound (e.g., complexed $VCl_3$) or the siliceous-containing carrier (e.g., silica) can be modified to make the vanadium component adhere strongly to the surface of the carrier. The procedures include

(a) the reaction of the zinc alkyl with the support followed by the chemisorption of the complexed vanadium compound;

(b) the reaction of the zinc alkyl with the complexed vanadium compound followed by chemisorption on the surface of the support; or

(c) the simultaneous deposition of the zinc alkyl and the complexed vanadium compound on the support followed by the chemisorption of the complexed vanadium on the support surface.

Of the investigated reagents, diethyl zinc (DEZ) stands out as the one reagent which consistently gave strong, up to 1:1 V/Zn adsorption of $VCl_3$ onto silica in THF slurry at room temperature. The resultant catalysts are quite active, having polymerization properties which are similar to those of the standard silica-impregnated *Beran et al. Catalyst System* precursor. Diethyl aluminum chloride (DEAC) treatment (either *in situ* in THF or in hexane) provided active catalysts with greater melt index response.

The chemisorbed zinc alkyl precursors can be prepared in one-pot reactions in a liquid slurry even at

room temperature. The supernatant liquid can be decanted/evaporated. When $VCl_3$ is added as a solid, the color of the supernatant turns only a faint pink, i.e., the dissolution of $VCl_3$ in THF is the rate-limiting step. When the $VCl_3$ is added as THF solution, the color of the supernatant disappears over ≈ 5 minutes. In both cases, a dark brown chemisorbed silica is obtained, which is dried on a rotating evaporator at 70° C. for one hour to give a tan, freely flowing, air-sensitive powder. Reverse addition (DEZ plus $VCl_3$ in THF followed by silica) also is possible. The preheating step removes free water and bound hydroxyl groups from the siliceous filler support material and this facilitates the chemisorption of the vanadium catalyst to the support. For example, Davison™ silica which has been thermally activated at 600° C., contains ≈ 0.7 mmol silanol groups per gram, existing predominantly in isolated or weakly hydrogen-paired form.

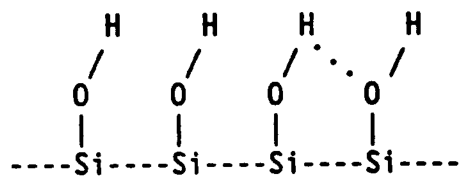

Diethyl zinc is believed to react with silanol groups of silica to give an alkyl zinc siloxide.

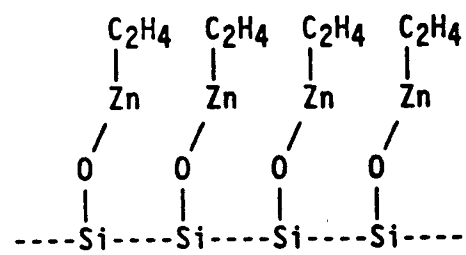

Treatment of $VCl_3$ solution in THF with dialkyl zinc results in formation of vanadium species which react with silica hydroxyl groups in irreversible fashion to give chemisorbed polymerization catalysts. The catalysts possess activity generally equivalent to the impregnated catalysts, with better morphology. With dialkyl zinc treatment as herein described, the *Beran et al. Catalyst* System give lower melt flow ratios (MFRs), have dampened hydrogen response, and lower comonomer incorporation. Further treatment with electron donors, with Lewis acids, etc., is possible, and leads to changes in polymerization properties.

The $VCl_3$ need not even be dissolved in THF and can be used in slurried solid form. Dialkyl zinc will cause significant vanadium chemisorption (≈ 0.4-0.5 mmol V/g silica). The distribution of the vanadium component within the silica can be adjusted to some extent by the catalyst preparation method so as to control uniformity of distribution, extent of penetration of the pore of the silica support, and the like considerations. Significant to vanadium distribution seems to be the distribution and availability of alkyl zinc modified silanol groups on the silica.

In THF slurry at room temperature, $VCl_3$ does not adsorb on an unmodified 600° C. heat-treated silica. However, on silica treated with either stoichiometric or sub-stiochiometric amounts of DEZ, there is observed strong adsorption of vanadium even at room temperature (the silica turns dark brown, the orange-red color of the $VCl_3$ supernatant fades).

Chemisorption occurs at less than or equal to 1:1 V/Zn mol ratio and appears to maximize near 0.5 mmol V/g silica for the 600° C. of surface area 300 $m^2$ used below in the examples. Monolayer coverage may have been achieved Depending on the residual vanadium concentration in solution, additional physisorption can occur. Physisorption increases with increasing concentration of vanadium in solution.

*Other Metal Alkyls*

It has been determined that other metal alkyls fail to provide the advantages of zinc alkyls. For example, triethyl aluminum gives only moderate amount of chemisorption. Dialkyl magnesium give high levels of adsorption but the resulting catalyst had poor activity.

The chemisorbed vanadium center in turn can be modified with additional ligands, reducing agents, alkylating agents, etc., to give further chemisorbed catalyst precursors. Depending on the ligand strength of

the modifier, the subsequent modification of the chemisorbed species can be carried out either in the original THF slurry (one-pot reactions), or subsequently in hydrocarbon slurry.

***Polymerization***

The ethylene polymerization is conducted in the gas phase using well established procedures in the art. It is preferred to polymerize in a continuous, fluidized bed. In a continuous process of this type, portions of the catalyst composition containing the promoter, along with the cocatalyst, and monomers are fed to a reactor vessel from which ethylene polymer product is continuously removed. With respect to ethylene copolymers, their density may be controlled and varied over a wide range, if desired, depending upon the amount of alphaolefin comonomer addition and upon the particular comonomer employed. Lower densities are obtained with greater mole percent of alpha-olefin added to the polymerization as a polymerizate.

Polymerization is conducted at a temperature below the sintering of the ethylene polymer product. The operating temperature will range from between about 30 °C. to about 115 °C. Preferred operating temperatures will vary depending upon the ethylene polymer density which is desired. High density ethylene polymers of greater than about 0.94 g/cc are produced at operating temperatures of between about 90 °C. to about 110 °C., and preferably at about 100 °C. Low density ethylene polymers ranging in density from about 0.91 to about 0.94 g/cc are preferably produced at an operating temperature of between about 75 °C. to about 90 °C. Very low density ethylene polymers of less than about 0.91 g/cc are preferably produced at an operating temperature of between about 35 °C. to about 75 °C., using procedures as described in EP 120 503 entitled "Preparation of Low Density, Low Modulus Ethylene Copolymers in a Fluidized Bed". Fluid bed reactors are typically operated at pressures of up to about 1000 psi and preferably between about 50 to about 350 psi.

The catalyst systems of this invention are particularly useful in making EPM and EPDM copolymers. EPM or EPDM copolymers are typically characterized as ethylene-alpha- $C_3$-$C_{18}$ olefin copolymers. Illustrative of such polymers are those comprised of ethylene and propylene or ethylene, propylene and one or more dienes. Copolymers of ethylene and higher alpha-olefins such as propylene often include other polymerizable monomers, such as non-conjugated dienes, illustrated by the following:

- ♦ straight chain acyclic dienes such as: 1,4-hexadiene, 1,6-octadiene, and the like;
- ♦ branched chain acyclic dienes such as: 5-methyl-1, 4-hexadiene, 3,7-dimethyl-1,6-octadiene, 3,7-dimethyl-1,7-octadiene and the mixed isomers of dihydro-myrcene, dihydroocinene, and the like;
- ♦ single ring alicyclic dienes such as: 1,4-cyclohexadiene, 1,5-cyclooctadiene, 1,5-cyclododecadiene, and the like;
- ♦ multi-ring alicyclic fused and bridged ring dienes such as: tetrahydroindene, methyltetrahydroindene, dicyclopentadiene, bicyclo-(2,2,1)-hepta-2,5-diene, alkenyl, alkylidene, cycloalkenyl and cycloalkylidene norbornenes such as 5-methylene-2-norbornene (MNB), 5-ethylidene-2-norbornene (ENB), 5-propyl-2-norbornene, 5-isopropylidene-2-norbornene, 5-(4-cyclopentenyl)-2-norbornene, 5-cyclohexylidene-2-norbornene, and the like.

The catalytic behavior of the chemisorbed precursors under standard slurry conditions show activities ranging from about 70 to about 100% of the activity of standard impregnated *Beran et al. Catalyst System* precursor (see Tables IA and IB below). Chloroform addition provided acceptable polymerization properties. Resin melt flow values were consistently within the range of standard resin values as obtained with the *Beran et al. Catalyst System*. Thus, the performance of the chemisorbed precursors could not be differentiated from that of the standard impregnated *Beran et al. Catalyst System* in laboratory slurry HDPE reactions.

In low density polymerization reactions the chemisorbed precursor perform slightly differently than standard impregnated *Beran et al. Catalyst* System precursor. The zinc alkyl treated/V precursors shows somewhat poorer comonomer response than the standard impregnated precursor (Table II). While only 20 ml of hexene are required to produce a 949 kg/$m^3$ density copolymer with *Beran et al. Catalyst System* precursor, three times that amount are required with the zinc alkyl treated silica containing the V precursor to produce a resin of equivalent density and melt index. As with standard *Beran et al. Catalyst System* catalysts, a DEAC treatment of precursor in hexane improved catalyst activity and comonomer response. For a given charge of comonomer, incorporation increased with increasing DEAC/V ratio. DEAC treatment also increased resin MI and lowered resin MFR. The lower comonomer incorporation suggests that the chemisorbed catalysts do indeed have altered electronic environments.

The high density polymerization properties of chemisorbed catalyst (DEZ/$VCl_3$/THF/600 °C. heat treated silica) were in general indistinguishable from those of the impregnated catalyst, regardless of the order of addition of reagents ($VCl_3$ to pretreated DEZ treated silica vs $VCl_3$/DEZ plus silica).

Melt index response of the chemisorbed catalyst to $H_2$ appears to be lower than for purely impregnated precursor. This suggests that more $H_2$ can be introduced into the reactor, thus suppressing the isomerization reaction. High $VCl_3$ loadings (greater than 0.3 mmol V/g silica) cannot be readily achieved via *Beran et al.* impregnation, due to solubility limitations in THF but can be readily achieved according the invention. Higher loadings would be desirable to increase per-particle catalyst activity.

Morphology of polymers obtained from chemisorbed precursors can be regulated by controlling the rate of chemisorption. When chemisorbing $VCl_3$ onto DEZ-treated silica, the resultant polymers tended to be full, and had fewer fines than obtained with impregnated *Beran et al. Catalyst System*. When the highly reactive (DEZ = $VCl_3$) mixture was allowed to come into contact with silica, strong and rapid chemisorption occurred at the silanol groups at the outer periphery of the silica, and shell-like polymers were obtained. More uniform deposition (and fuller polymer particles) were obtained at higher V loadings, where all silanol sites within the silica substrate were used for chemisorption.

The properties of the polymers produced in the examples were determined by the test procedures:

| Property | Test Procedure |
|---|---|
| Bulk Density(lb/ft$^3$) | ASTM-D-1895 (Method B). |
| Density (g/cc) | ASTM-1505, based on ASTM-D-1928 (Procedure C) plaque preparation |
| Flow Index (dg/min) | ASTM D-1238-Condition F |
| Melt Flow Ratio | Flow Index/Melt Index; with melt index measured using ASTM D-1238 Condition E. |

Abbreviations used in the Examples are defined as follows:

| Designation | Description |
|---|---|
| DEZ | Diethyl Zinc |
| DEAC | Diethylaluminum chloride |
| FI | Flow index |
| MFR | Melt flow ratio |
| TEAL | Triethylaluminum |
| THF | Tetrahydrofuran |
| TIBA | Triisobutylaluminum |

## Examples

*Support Preparation*

(A) Heat treated silica (8.57 g) [4] was put into a 100 ml side-arm flask equipped with a 1" magnetic spin bar. The flask had previously been dried in a vacuum oven at 60° C., and was purged with 3 pump/flush cycles with nitrogen. TEAL (3.85 mmol) [5] was added, followed by enough hexane to produce a slurry. The flask was stirred for 30 minutes, and the hexane solvent was removed by applying a partial vacuum while heating to 70° C. for 1 hour.

(B) This procedure is repeated using 9.7 g of the heat treated silica and 4.36 mmol DEZ (0.89 mmol/ml,

4. heat treated to 600°C.

5. 2.5 ml 1.54 N solution in hexane

4.90 ml) rather than the TEAL.

*Slurry Polymerization*

Laboratory slurry polymerizations were carried out in a 1 liter autoclave equipped with agitation, temperature control and gas feed streams (hydrogen, nitrogen, ethylene). The ethylene was fed on demand maintaining a constant total pressure as indicated in the tables. Cocatalyst type and promoter type are recited in the tables.

## TABLE 1

## POLYMERIZATION PROPERTIES

| Example[a] | Support/ Precursor | mmol V Used | $H_2$ psi | Yield g | Productivity | MI | MFR | Bulk Density |
|---|---|---|---|---|---|---|---|---|
| 1 | ZOS/V/Chem[b] | 0.06 | 10 | 167 | 1675 | 0.2 | 80 | 17.9 (287) |
| 2 | ZOS/V/Chem[b] | 0.04 | 10 | 175 | 2825 | 0.1 | 82 | 17.2 (272) |
| 3 | ZOS/V/Chem[b] | 0.05 | 25 | 161 | 2050 | 3.9 | 61 | 16.9 (271) |
| 4 | SiOH/V/Impreg.[c] | 0.03 | 10 | 161 | 2600 | 0.2 | 57 | 17.3 (277) |

[a] Reaction Conditions: 160 psi total pressure, 85°C., 0.25 mmol V/g precursor, 40:1 TIBA/V, 40:1 $CCl_3H$/V.

[b] ZOS/V/Chem. means $VCl_3$ chemisorbed onto diethyl zinc treated 600°C. heat-treated silica, 0.3 mmol Zn/g silica.

[c] silica is treated with 5.5 wt.% TEAL according to *Beran et al.* catalyst preparation; see col. 6, lines 61 et seq., esp. col. 7, lines 1-3 of *Beran et al.*.

On visual examination of the polymers produced with the catalyst of this invention, one observes lower levels of fines and rounder and smoother particles than were obtained with control catalyst (example 4) utilizing the *Beran et al. Catalyst System*.

## TABLE 2
## CATALYTIC RESPONSE OF V PRECURSORS ON CHEMICALLY MODIFIED SUPPORTS

| Example Number | Catalyst | $H_2$ psi | Productivity | MI dg/min | MFR | Bulk Density | Comments |
|---|---|---|---|---|---|---|---|
| 7 | A | 10 | 1550 | 0.5 | 75 | | |
| 8 | B | 10 | 1500 | 0.8 | 86 | 20 | |
| 9 | A | 20 | 1026 | 0.4 | 86 | 19 | |
| 10 | C | 20 | 1600 | No Flow | No Flow | | Lower melt index response |

*Table 2 catalyst descriptions:*

A: Chemisorbed *Beran et al. Catalyst System* precursor prepared by treating a silica slurry of $VCl_3$ + THF plus DEZ post added.

B: Chemisorbed *Beran et al. Catalyst System* precursor on prepared by premixing DEZ and precursor solution prior to addition of silica.

C: Chemisorbed *Beran et al. Catalyst System* precursor by treating a DEZ treated silica that is slurried with solution $VCl_3$ + THF.

*Table 2 Reaction Conditions:*

160 psi total pressure, 85°C., 0.5 hour, 0.050 mmol V, 0.25 mmol V/g, 40/1 TIBA/V, 40/1 $CHCl_3$/V.

## TABLE 3

## LDPE COPOLYMERS PREPARED WITH CHEMISORBED V CATALYST

| Example No. | Precursor Description | V (mmols) | Promoter/ V | Hexene (ml) | $H_2$ psi | Time (min.) | Yield (g) | Prod. 1/2 hr. [Full] | MI | MFR | Density $kg/m^3$ |
|---|---|---|---|---|---|---|---|---|---|---|---|
| 11 | ZOS/V/ Chem | .05 | $CHCl_3$ 40:1 | 60 | 10 | 51 | 108 | 2150 [1900] | 0.46 | 96 | 949 |
| 12 | ZOS/V/ Chem | .05 | $CH_2Cl_2$ 40:1 | 60 | 10 | 79 | 95 | 1300 [1075] | 0.34 | 91 | 955 |
| 13 | (ZOS/V) DEAC Hexane 1.5 | 0.5 | $CHCl_3$ 40.1 | 60 | 10 | 66 | 186 | 2600 [2530] | 0.07 | 196 | 944 |
| 14 | (ZOS/V) DEAC Hexane 4.5 | .05 | $CHCl_3$ 40:1 | 60 | 10 | 77 | 180 | 2700 [2100] | 5.58 | 63 | 932 |

*Table 3 Reaction Conditions:*

**160 psi total pressure, 1 hour reaction time, 85°C., 0.25 mmol V/g precursor, 40:1 TIBA/V, 40:1 $CHCl_3$/V.**

The following set of experiments measure chemisorption and physisorption of vanadium on the support and the resulting analyses are set forth in Table 4 below. In these experiments, the object was to determine the effect of $VCl_3$ on DEZ treated silica. In addition, a control experiment containing no DEZ was included as well as an experiment using elemental zinc in place of the DEZ.

The experiments were conducted as follows: Under a nitrogen blanket, 2.0 grams of beat treated silica (heated to 600° C.), 15 mls THF (distilled over sodium), and DEZ (1M in hexane) were added sequentially to a 50 ml airlessware flask equipped with a sidearm stopcock and magnetic stir bar, and allowed to stir for 30 minutes. A dark red solution of $VCl_3$ in THF was then added to provide either 0.52 or 1.04 mmol V/g silica and the mixture was stirred an additional 30 minutes. The stirrer was then turned off and the layers were allowed to separate completely. The silica has turned red-purple and the supernatant was either clear or faint purple. The supernatant was drawn off via a syringe and placed in a septum-sealed prepurged vial. The remaining silica-containing layer is filtered and washed 3 times with fresh THF under nitrogen and then dried on a roto-evapotator. Experiments were conducted at DEZ levels of 0, 0.2, 0.35, 0.5 and 0.7 mmol Zn/g silica.

Using the same procedure, 0.2 g (3 mmol) zinc dust was used in place of the DEZ. When the $VCl_3$/THF solution was added, the solution immediately turned a blue/green color. The silica remained colorless. The same workup procedure was followed thereafter.

Chemisorption, as reported in Table 4, is the analysis of the vanadium on the silica that could not be removed by repeated washings with THF. Physisorption, as reported in Table 4, is the analysis of the vanadium removed from the supernatant minus the amount found to be chemisorbed.

mmol V physisorbed = mmol V total - mmol V chemisorbed - mmol V supernatant

The total of V adsorbed on the silica is the total of the chemisorbed and physisorbed vanadium.

## Table 4

| mmol DEZ/ g $SiO_2$ | Starting mmol V/g $SiO_2$ | mmol V chemi-sorbed/g $SiO_2$ | mmol V physi-sorbed/g $SiO_2$ | Total mmol V Adsorbed/g $SiO_2$ |
|---|---|---|---|---|
| 0 | 0.52 | 0.70 | 0 | 0.70 |
| 0.20 | 0.52 | 0.125 | 0.040 | 0.165 |
| 0.35 | 0.52 | 0.290 | 0.225 | 0.515 |
| 0.50 | 0.52 | 0.330 | 0.190 | 0.520 |
| 0.70 | 0.52 | 0.320 | 0.200 | 0.520 |
| 0.35 | 1.04 | 0.340 | 0.335 | 0.675 |
| 0.50 | 1.04 | 0.395 | 0.360 | 0.755 |
| 0.70 | 1.04 | 0.530 | 0.315 | 0.845 |
| mmol Zn/g $SiO_2$ | | | | |
| 1.5 | 0.52 | 0.005 | ≈0 | 0.005 |

## Claims

1. A catalyst precursor for the polymerization of ethylene comprising a siliceous containing support that contains chemisorbed alkyl zinc and adsorbed complexed vanadium trihalide.

2. The catalyst precursor of claim 1 wherein the siliceous support is a heat treated silica.

3. The catalyst precursor of claim 1 or 2 wherein the vanadium trihalide is chemisorbed to the support.

4. The catalyst precursor of claim 3 wherein the complexed vanadium trihalide is chemisorbed and physisorbed to the support.

5. The catalyst precursor of any of claims 1 to 4 wherein the vanadium trihalide is vanadium trichloride.

6. The catalyst precursor of any of claims 1 to 5 wherein the vanadium trihalide is complexed with an electron donor.

7. The catalyst precursor of claim 6 wherein the electron donor is selected from alkyl esters of aliphatic and aromatic carboxylic acids, aliphatic ketones, aliphatic amines, aliphatic alcohols, alkyl and cycloalkyl ethers, and mixtures thereof.

8. The catalyst precursor of claim 7 wherein the electron donor is tetrahydrofuran.

9. The catalyst precursor of any of claims 1 to 8 wherein the alkyl zinc has the formula:

R♦R□Zn (VI)

wherein $R^{\blacklozenge}$ and $R^{\square}$ are each alkyl of 1 to about 12 carbon atoms.

**10.** The catalyst precursor of any claims 1 to 9 containing a modifier having the formula:

$MX_a$

in which M is either boron or $AlR_{(3-a)}$, each R is the same or different alkyl provided that the total number of aliphatic carbon atoms in any one R group may not exceed 14; X is chlorine, bromine or iodine; and a is 1 or 2 with the provision that when M is boron, a is 3.

**11.** The catalyst precursor of claim 3 wherein supported chemisorbed vanadium halide complex is reacted with the chemisorbed zinc alkyl.

**12.** A supported catalyst precursor for producing polyethylene wherein the supported catalyst precursor comprises
a) a vanadium compound which is the reaction product of a vanadium trihalide and a liquid, organic Lewis base electron donor in which the vanadium trihalide is soluble;
b) a modifier having the formula:

$MX_a$

wherein M is either boron or $AlR_{(3-a)}$ and wherein each R is independently alkyl provided that the total number of aliphatic carbon atoms in any one R group may not exceed 14; X is chlorine, bromine or iodine; and a is 1 or 2 with the provision that when M is boron, a is 3; said vanadium compound and said modifier are on a solid, inert carrier; characterized in that
i) the support is siliceous containing;
ii) the support contains chemisorbed zinc alkyl; and
iii) the vanadium compound is absorbed to the support.

**13.** The catalyst precursor of any of claims 1 to 12 wherein the zinc alkyl is diethyl zinc.

**14.** A catalyst composition for the polymerization of ethylene to make ethylene homopolymers and copolymers, which comprises
(a) a chemisorbed supported precursor comprising a complexed vanadium halide catalyst chemisorbed in a siliceous containing support wherein the support is treated with a zinc alkyl chemisorption agent;
(b) a cocatalyst; and
(c) a promoter.

**15.** The catalyst composition of claim 14 wherein the complexed vanadium halide complex is the reaction product of a vanadium trihalide and a liquid, organic Lewis base electron donor in which the vanadium trihalide is soluble.

**16.** The catalyst composition of claim 14 or 15 wherein the zinc alkyl is a dialkyl zinc compound, preferably diethyl zinc.

**17.** A process for the polymerization of ethylene in a gas phase or suspension reaction which comprises effecting the polymerization reaction in the presence of a catalyst of any of claims 14 to 16.